# EUROPEAN PATENT APPLICATION

(11) **EP 3 322 121 A1**
(43) Date of publication of application: **16.05.2018**
(21) Application number: 16198963.7
(22) Date of filing: 15.11.2016
(51) Int. Cl.: H04L 12/18

(54) **COMPUTER-IMPLEMENTED METHOD OF BROADCAST MESSAGING**

(71) Applicant: Internetagentur Silver UG (haftungsbeschränkt), 61273 Wehrheim (DE)
(72) Inventor: Silver, Gary, 61273 Wehrheim (DE); May, Stephen, 61273 Wehrheim (DE)
(74) Representative: Meyer zu Bexten, Elmar

(57) **Abstract**

Problem

The invention aims to seek an alternative to known computer-implemented methods of broadcast messaging which provides the same or similar effects or is more cost-effective.

Solution

The problem is solved by, in response to a first request by a subscriber (10), storing subscriptions in a first table of a database (11), each subscription defined by the subscriber (10), a field of interest, and a physical location, in response to a second request by a vendor (12), storing broadcast messages in a second table of the database (11), each broadcast message defined by a message text, a subject matter, and a venue, for each broadcast message stored in the second table, selecting from the first table the subscribers (10) of those subscriptions where the field of interest matches the subject matter of the respective broadcast message and the location matches the venue of the respective broadcast message and associating in the database (11) the respective broadcast message with the selected subscribers (10), and, in response to a third request by the subscriber (10), selecting from the second table those broadcast messages associated with the subscriber (10) and returning the selected broadcast messages to the subscriber (10).

## Description

### Technical Field

The invention relates to messaging.

### Background Art

In the context of computer science and telecommunications, by broadcasting is meant the distribution of text, audio, video, or multimedia content to a dispersed audience via any electronic mass communications medium such as the World Wide Web. An overview of the subject may be gathered from PERRIG, Adrian, et al. Secure broadcast communication in wired and wireless networks. 1st edition. Edited by GREENE, Alexander. Springer Science & Business Media, 2012. ISBN 0792376501.

US 2010029245 A (ENVISIONIT LLC [US]) 02.04.2010 discloses a message alert broadcast broker and method for providing a broadcast message to a plurality of user devices located within a broadcast target area including a broadcast service bureau receiving from one of a plurality of coupled broadcast agent access systems providing a broadcast request from an originating broadcast agent associated one broadcast agent access system, the broadcast request including a broadcast agent identification, the geographically defined broadcast target area, a broadcast message, and a broadcast channel code, the broadcast service bureau verifying the broadcast request as a function of the broadcast agent identification including the authority of the originating broadcast agent to send the broadcast message to the broadcast target area using the broadcast channel code, the broadcast service bureau processing the verified broadcast request for transmission to one or more mobile telephone networks providing service to at least a portion of the broadcast target area of the broadcast request.

An example of an early computer-mediated community tool may be taken from WEISZ, Justin D., et al. Synchronous broadcast messaging: the use of ICT. Proceedings of the SIGCHI 2006 Conference on Human Factors in Computing Systems. April 22, 2006, p.1293-1302.

### Summary of invention

The invention as claimed is hereinafter disclosed in such a way that the technical problem with which it deals can be appreciated and the solution can be understood.

### Technical Problem

The invention aims to seek an alternative to known computer-implemented methods of broadcast messaging which provides the same or similar effects or is more cost-effective.

### Solution to Problem

To elucidate the nature of the solution, reference is made to the characterizing portion of the independent claims.

### Advantageous effect of inventio n

Preferably, the invention may be embodied in an application ("app") running on a mobile device such as a smartphone. An app user can employ this embodiment to request notifications of services and businesses in which the subscriber takes specific interest. Pertinent categories or fields of interest might be found, for instance, by means of a keyword search.

In the same manner, the user may retrieve a current calendar of events in her home town or nearby communities, leveraging the application's "push" mechanism in the event of, for instance, a public alert or imminent garbage collection. To this end, the user specifies her own fields of interest and locations for which to subscribe, considering any personal preferences she might have.

An embodiment of the invention may thus permit radial search, the locating of parking lots or the user's own parked vehicle, lost and found, swap meets, job exchanges, stamp cards, special offers, rewards programs, after-hours pharmacy services, or closed user groups, e. g., for dance schools or seminars. Additional features such as integrated reservation, navigation, QR code scanning, or communal deficiency reporting may round out the app's functionality.

Further embodiments of the invention are set out in the dependent claims.

### Brief description of drawings

Figure 1 is an architectural overview.
Figure 2 shows a first use case.
Figure 3 shows a second use case.
Figure 4 shows a third use case.

### Description of embodiments

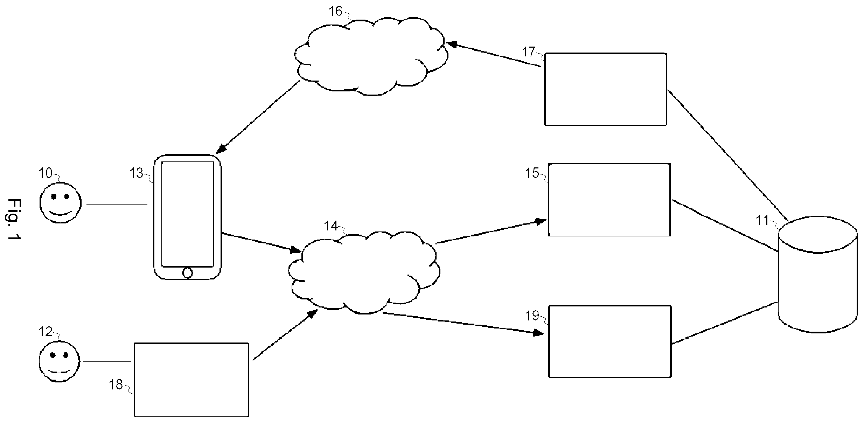

Ways of carrying out the invention are hereinafter described in detail, collectively referring to the architectural overview of Figure 1.

### Example

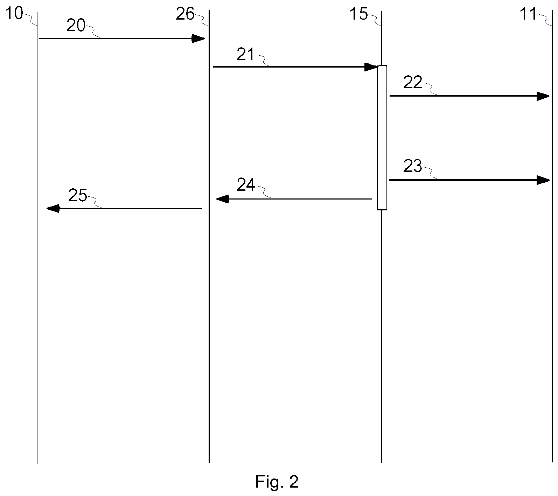

Figure 2 illustrates the procedure of subscribing to events in a specific location in which a subscriber (10) takes a specific interest. To this end, the subscriber (10) taps on a checkbox representing the pertinent category (20). In response to this tap, the application (26) sends to an application server (15) an identifier associated with the application (26), a geolocation of the - typically mobile - device (13) running the application (26), and an identifier associated with the category or field of interest (21). This request is submitted by the device (13) in JavaScript Object Notation (JSON) via the World Wide Web (14) using the HTTP Secure protocol (HTTPS) to an application server (15).

To process the incoming request, the application server (15) provides a Web service per the principles of representational state transfer (REST). The geolocation submitted by the device (13) enables the application server (15) to determine the city nearest the subscriber (10) in a procedure commonly referred to as reverse geocoding (22). Upon persistently storing (23) the determined physical location, along with the subscriber (10) and her field of interest, in a first table of a backend database (11) maintained for this purpose, the application server (15) returns a success status (24) to the application (26). The application (26) in turn marks the tapped checkbox as ticked, for instance, by means of a green or otherwise colored mark.

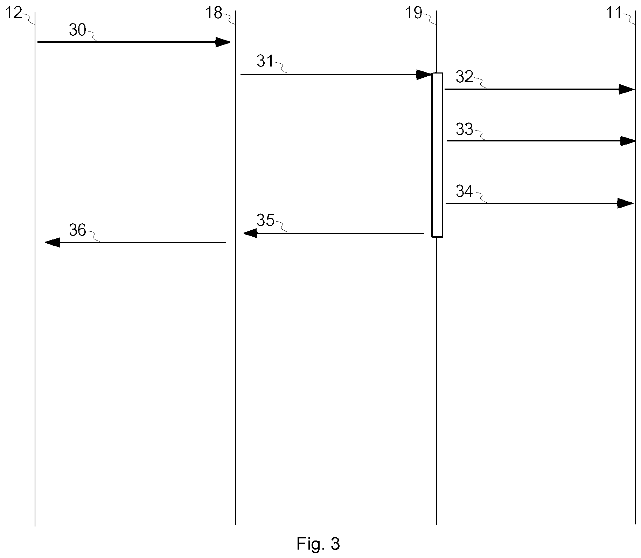

The content management procedure used to broadcast messages for distribution to interested subscribers (10) may be gathered from Figure 3. Hereunto, a vendor (12) enters a message text, the subject matter categories of the envisaged broadcast message, and the city or cities - hereinafter referred to simply as "the venue" - to which the advertised event or offer pertains. These specifications are submitted (30) vis-à-vis a Web frontend (18) or similar client software designed for this purpose.

Said Web frontend (18) securely posts (31) the request by the vendor (12) to an arbitrary Web service provided by a Web server (19). Upon storing (32) the broadcast message in a second table of the database (11), the Web server (19) selects from the first table those subscriptions where the field of interest matches (33) the subject matter of the respective broadcast message and the location matches the venue of the respective broadcast message. For instance, the location may be considered to match the venue if the latter lies within a given distance, such as 15 km, from the location. Upon associating (34) the new broadcast message with the respective subscribers (10) within the database (11), the Web server (19) returns a success status (35) to the Web frontend (18), which in turn reports the successful entry to the originating vendor (12).

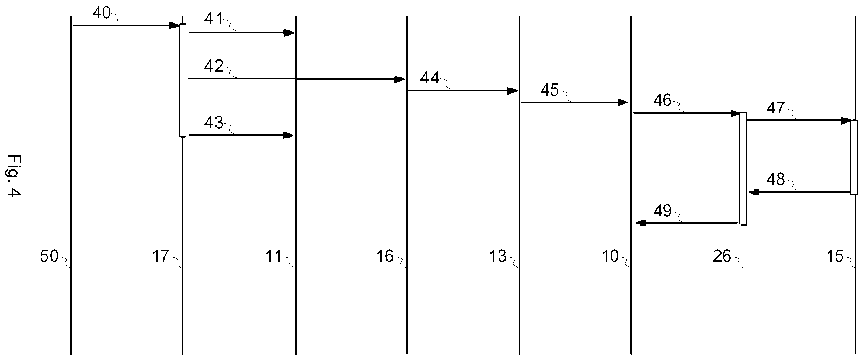

Finally, Figure 4 visualizes the scheduled delivery of messages to their subscribers (10). This procedure is triggered by a scheduler (50) that sends (40) a corresponding request to a dedicated messaging server (17). The messaging server (17) then selects (41) from the first table those subscribers (10) with which pending messages have been associated as described above. For each such subscriber (10), the messaging server (17) now prompts (42) a messaging service (16) to send a push message to the respective subscriber (10), further marking the pending messages in the database (11) as having been sent (43).

Once prompted, the messaging service (16) sends (44) a push message to the respective device (13), which in turn presents (45) the push message to the targeted subscriber (10). Herein, the push message is associated with the application (26) so that when the subscriber (10) taps (46) on the push message, the application (26) instantaneously requests (47) its pending messages from the application server (15). In response to this request, the application server (15) selects and returns from the second table those broadcast messages associated with the subscriber (10) and returning the selected broadcast messages to the application (26), which finally presents to the subscriber (10) an inbox containing the received broadcast messages.

### Industrial applicability

The invention is applicable, *inter alia,* throughout the catering, entertainment, and leisure industries.

### Reference signs list

The following key contains all reference signs used in the description, claims, and drawings, together with the designation of the features which they indicate.
- 10: Subscriber
- 11: Database
- 12: Vendor
- 13: Mobile device
- 14: World Wide Web
- 15: Application server
- 16: Messaging service
- 17: Messaging server
- 18: Web frontend
- 19: Web server
- 20: Taps on Category Checkbox
- 21: Sends app-id, geo-coordinates of app device and category-id
- 22: Finds nearest city for received geo-coordinates
- 23: Persists subscription of city-category-combination for app
- 24: Returns success status
- 25: Shows green mark in checkbox of category
- 26: App
- 30: Enters message text, selects categories and cities for message and submits
- 31: Sends vendor-id, message text, category-ids and city-ids
- 32: Persists message for vendor
- 33: Finds apps with subscription of city-category-combination
- 34: Persists assignment of message to app
- 35: Returns success status
- 36: Shows success
- 40: Submits request for sending messages
- 41: Finds apps with unsent messages
- 42: Submits for each found app the message text and app-identifier for messaging
- 43: Persists message as sent
- 44: Sends Push-Message
- 45: Shows Push-Message
- 46: Taps on Push-Message
- 47: Requests messages for app-id
- 48: Returns messages
- 49: Shows inbox with messages
- 50: Scheduler

### Citation list

The following documents are referenced throughout this description.

### Patent literature

US 2010029245 A (ENVISIONIT LLC [US]) 02.04.2010

### Non-patent literature

WEISZ, Justin D., et al. Synchronous broadcast messaging: the use of ICT . Proceedings of the SIGCHI 2006 Conference on Human Factors in Computing Systems. April 22, 2006, p.1293-1302.

PERRIG, Adrian, et al. Secure broadcast communication in wired and wireless networks. 1st edition. Edited by GREENE, Alexander. Springer Science & Business Media, 2012. ISBN 0792376501.

## Claims

1. Computer-implemented method of broadcast messaging **characterized in**,
in response to a first request by a subscriber (10), storing subscriptions in a first table of a database (11), each subscription defined by the subscriber (10), a field of interest, and a physical location,
in response to a second request by a vendor (12), storing broadcast messages in a second table of the database (11), each broadcast message defined by a message text, a subject matter, and a venue,
for each broadcast message stored in the second table,
selecting from the first table the subscribers (10) of those subscriptions where the field of interest matches the subject matter of the respective broadcast message and the location matches the venue of the respective broadcast message and
associating in the database (11) the respective broadcast message with the selected subscribers (10), and,
in response to a third request by the subscriber (10), selecting from the second table those broadcast messages associated with the subscriber (10) and returning the selected broadcast messages to the subscriber (10).

2. Method as in Claim 1
wherein
the first request and third request are submitted by a mobile device (13), preferably a smartphone, in a JavaScript Object Notation via the World Wide Web (14) to an application server (15) and
the application server (15) provides a preferably REST-compliant Web service and Transport Layer Security.

3. Method as in Claim 2
wherein,
prior to the broadcast messages being selected,
a messaging service (16) sends a push message to the device (13),
the device (13) presents the push message to the subscriber (10), and,
in response to the subscriber (10) tapping on the push message, the third request is submitted through an application (26) associated with the push message.

4. Method as in Claim 3
wherein,
when associating the respective broadcast message, the respective broadcast message is marked as pending in the database (11) and,
prior to sending the push message,
a scheduler (50) submits a fourth request to a messaging server (17),
the messaging server (17) selects from the first table those subscribers (10) with which pending messages are associated and,
for each selected subscriber (10), the messaging server (17) prompts the messaging service (16) to send the push message and marks the broadcast message as sent in the database (11).

5. Method as in Claim 3 or Claim 4
wherein,
upon receiving the selected broadcast messages, the application (26) presents to the subscriber (10) an inbox containing the received broadcast messages.

6. Method as in any of Claim 3 to Claim 5
wherein
the first request is submitted in response to the subscriber (10) tapping on a checkbox associated with the field of interest and,
upon receiving an acknowledgment from the application server (15), the application (26) marks the checkbox as ticked.

7. Method as in Claim 6
wherein
upon the subscriber (10) tapping on the checkbox,
the application (26) sends to the application server (15) a first identifier associated with the application (26), a geolocation of the device (13), and a second identifier associated with the field of interest and
the application server (15) determines a city near the geolocation by means of reverse geocoding, the city defining the physical location.

8. Method as in any of Claim 3 to Claim 7
wherein
upon request by the subscriber (10), the application (26) stores the geolocation on the device (13) and eventually navigates the subscriber (10) to the stored geolocation.

9. Method as in any of the preceding claims
wherein
the second request is submitted by a Web frontend (18) to a Web server (19) and
the Web server (19) provides an arbitrary Web service and Transport Layer Security.

10. Method as in Claim 9
wherein
prior to the second request being submitted, the vendor (12) specifies the message text, the subject matter of the broadcast message, and the venue through the Web frontend (18) and
upon receiving an acknowledgment from the Web server (19), the Web frontend (18) reports success to the vendor (12).

11. Method as in any of the preceding claims
wherein
the location is considered to match the venue if the venue lies within a given distance, preferably 15 km, from the location.

12. Method as in any of the preceding claims
wherein
the subject matter of the message pertains to at least one of the following regional services:
a waste calendar,
an after-hours pharmacy service,
a parking lot,
a gas station locator,
a lost and found, or
a wireless hotspot locator.

13. Data processing apparatus comprising means for carrying out the method of Claim 1.

14. Computer program comprising instructions which, when the program is executed by a computer, cause the computer to carry out the method of Claim 1.

15. Computer-readable medium comprising instructions which, when executed by a computer, cause the computer to carry out the method of Claim 1.
